# EUROPEAN PATENT APPLICATION

(11) **EP 4 603 902 A1**
(43) Date of publication of application: **20.08.2025**
(21) Application number: 24216835.9
(22) Date of filing: 02.12.2024
(51) Int. Cl.: G02F 1/1335, G02F 1/1362, G02F 1/1339, G02F 1/1337

(54) **DISPLAY PANEL**

(30) Priority: 16.02.2024 US 202463554169 P; 18.06.2024 TW 113122526
(71) Applicant: Hannstar Display Corporation, Taipei City 114762 (TW)
(72) Inventor: CHIAO, Yu-Chi, 114762 Taipei City (TW); CHANG, Chung Lin, 114762 Taipei City (TW)
(74) Representative: Becker, Eberhard

(57) **Abstract**

A display panel (10) including a first substrate (101), a second substrate (102), a pixel structure (PX), a liquid crystal layer (LCL) and a light shielding layer (LSL) is provided. The first substrate (101) and the second substrate (102) are overlapped with each other along a stacking direction (D3). The pixel structure (PX) is disposed on the first substrate (101) and has an active device (T) and a reflective electrode (RE) electrically connected to each other. The liquid crystal layer (LCL) is disposed between the first substrate (101) and the second substrate (102). The light shielding layer (LSL) is disposed on the second substrate (102) and includes a first light shielding pattern (LSP1). The first light shielding pattern (LSP1) overlaps the reflective electrode (RE) of the pixel structure (PX) along the stacking direction (D3).

## Description

### BACKGROUND

### Technical Field

The disclosure relates to a display panel, and more particularly, to a display panel provided with a light shielding layer.

### Description of Related Art

In order to avoid image sticking or reduce power consumption, current display panels often use polarity inversion methods such as column inversion or dot inversion to operate multiple pixel electrodes. However, the difference in operating voltage between different pixels can easily cause poor alignments of a portion of the liquid crystal layer between the electrodes. On the other hand, in the display panel, an area with significant differences in film stack structure are prone to forming a weak alignment area during the subsequent alignment process, leading to poor alignment of the liquid crystal layer in the area. Poor alignment of the liquid crystal layer will cause light leakage when the display panel is operated in a dark state, resulting in low display contrast.

### SUMMARY

The disclosure provides a display panel with improved performance in a dark state.

A display panel in the disclosure includes a first substrate, a second substrate, a pixel structure, a liquid crystal layer and a light shielding layer. The first substrate and the second substrate are overlapped with each other along a stacking direction. The pixel structure is disposed on the first substrate and has an active device and a reflective electrode electrically connected to each other. The liquid crystal layer is disposed between the first substrate and the second substrate. The light shielding layer is disposed on the second substrate and includes a first light shielding pattern. The first light shielding pattern overlaps the reflective electrode of the pixel structure along the stacking direction.

In an embodiment of the disclosure, the display panel further includes an insulating layer disposed on the first substrate and covering the active device. The insulating layer has an opening overlapping the reflective electrode of the pixel structure. The reflective electrode is disposed on the insulating layer and extends into the opening to electrically connect the active device. An orthographic projection of the opening of the insulating layer on a substrate surface of the first substrate is located within an orthographic projection of the first light shielding pattern on the substrate surface.

In an embodiment of the disclosure, a plurality of the reflective electrodes of a plurality of the pixel structures of the display panel are arranged at intervals along a first direction. A gap is provided between any two adjacent ones of the reflective electrodes. The light shielding layer further includes a second light shielding pattern. The second light shielding pattern overlaps the gap and has a first micro-slit and a second micro-slit. The first micro-slit and the second micro-slit are respectively located on two opposite sides of the gap along the first direction.

In an embodiment of the disclosure, a plurality of the reflective electrodes of a plurality of the pixel structures of the display panel are arranged at intervals along a first direction. A gap is provided between any two adjacent ones of the reflective electrodes. The light shielding layer further includes a second light shielding pattern. The second light shielding pattern overlaps the gap and has a plurality of wide portions and a plurality of narrow portions. The wide portions and the narrow portions are alternately arranged along a second direction and are connected to each other. The first direction is perpendicular to the second direction. A width of any one of the wide portions along the first direction is greater than a width of any one of the narrow portions along the first direction.

In an embodiment of the disclosure, a plurality of the reflective electrodes of a plurality of the pixel structures of the display panel are arranged at intervals along a first direction and a second direction. The first direction is perpendicular to the second direction. A first gap is provided between any two adjacent ones of the reflective electrodes arranged along the first direction. The light shielding layer further includes a second light shielding pattern. The second light shielding pattern overlaps the first gap and has a micro-slit. The micro-slit overlaps the first gap. A second gap is provided between any two adjacent ones of the reflective electrodes arranged along the second direction. The light shielding layer further includes a third light shielding pattern. An orthographic projection of the second gap on the substrate surface is located within an orthographic projection of the third light shielding pattern on the substrate surface.

In an embodiment of the disclosure, the display panel further includes a spacer, a first alignment layer and a second alignment layer. The spacer is disposed between the first substrate and the second substrate. The first alignment layer is disposed on the first substrate and has a first alignment direction. The second alignment layer is disposed on the second substrate and has a second alignment direction. The spacer has a first side edge and a second side edge facing away from each other and sequentially arranged along the first alignment direction or the second alignment direction. The light shielding layer further includes a fourth light shielding pattern. In the stacking direction, the fourth light shielding pattern overlaps the second side edge of the spacer but does not overlap the first side edge of the spacer.

In an embodiment of the disclosure, a contour of orthographic projection of the spacer of the display panel on the substrate surface is circular. A contour of orthographic projection of the fourth light shielding pattern on the substrate surface is a half-moon shape.

In an embodiment of the disclosure, the display panel further includes a common electrode and a common electrode line. The common electrode is disposed on the first substrate and overlaps the reflective electrode of the pixel structure. The common electrode line is disposed on the first substrate and is connected to the common electrode. A plurality of the reflective electrodes are arranged at intervals along a first direction. A gap is provided between any two adjacent ones of the reflective electrodes. The gap extends in a second direction. The first direction is perpendicular to the second direction. The common electrode line has a portion overlapping the gap. The light shielding layer further includes a second light shielding pattern. An orthographic projection of the portion of the common electrode line on the substrate surface is located within an orthographic projection of the second light shielding pattern on the substrate surface.

In an embodiment of the disclosure, the display panel further includes a scan line. The scan line is disposed on the first substrate and electrically connected to the active device of the pixel structure. A plurality of the reflective electrodes are arranged at intervals along a first direction. A gap is provided between any two adjacent ones of the reflective electrodes. The gap extends in a second direction. The first direction is perpendicular to the second direction. The scan line has a portion overlapping the gap. The light shielding layer further includes a second light shielding pattern. An orthographic projection of the portion of the scan line on the substrate surface is located within an orthographic projection of the second light shielding pattern on the substrate surface.

In an embodiment of the disclosure, a plurality of the reflective electrodes of a plurality of the pixel structures of the display panel are arranged at intervals along a first direction and a second direction. The first direction is perpendicular to the second direction. A first gap is provided between any two adjacent ones of the reflective electrodes arranged along the first direction. A second gap is provided between any two adjacent ones of the reflective electrodes arranged along the second direction. The light shielding layer further includes a second light shielding pattern and a third light shielding pattern. An orthographic projection of the first gap on the substrate surface is located within an orthographic projection of the second light shielding pattern on the substrate surface. An orthographic projection of the second gap on the substrate surface is located within an orthographic projection of the third light shielding pattern on the substrate surface. A width of the second light shielding pattern along the first direction is different from a width of the third light shielding pattern along the second direction.

In an embodiment of the disclosure, the first substrate of the display panel is provided with a display area and a peripheral area outside the display area. A plurality of the pixel structures are disposed in the display area. The display area includes an edge display area adjacent to the peripheral area and a central display area away from the peripheral area. The pixel structures include a plurality of first pixel structures and a plurality of second pixel structures. The plurality of first pixel structures are disposed in the edge display area. The plurality of second pixel structures are disposed in the central display area. A first gap is provided between the two reflective electrodes of any two adjacent ones of the first pixel structures arranged along a first direction. A second gap is provided between the two reflective electrodes of any two adjacent ones of the second pixel structures arranged along the first direction. The light shielding layer further includes a second light shielding pattern and a third light shielding pattern. The second light shielding pattern overlaps the first gap and has at least one micro-slit. The third light shielding pattern overlaps the second gap. An orthographic projection of the second gap on the substrate surface is located within an orthographic projection of the third light shielding pattern on the substrate surface.

In an embodiment of the disclosure, the number of the at least one micro-slit of the second light shielding pattern of the display panel decreases gradually as it moves away from the peripheral area.

Based on the above, in a display panel according to an embodiment of the disclosure, a light shielding pattern overlapping a reflective electrode of a pixel structure is suitable for blocking light leakage caused by poor alignment of a liquid crystal layer above or at the edges of the reflective electrode, which helps to improve the performance of display panel operated in a dark state, and thereby enhancing its display contrast.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 and FIG. 2 are schematic front views of partial film layers of a display panel according to a first embodiment of the disclosure.
FIG. 3 and FIG. 4 are schematic cross-sectional views of the display panel of FIG. 1 and FIG. 2.
FIG. 5 is a schematic front view of partial film layers of a display panel according to a second embodiment of the disclosure.
FIG. 6 and FIG. 7 are schematic front views of partial film layers of a display panel according to a third embodiment of the disclosure.
FIG. 8 and FIG. 9 are schematic cross-sectional views of the display panel of FIG. 6 and FIG. 7.
FIG. 10 and FIG. 11 are schematic front views of partial film layers of a display panel according to a fourth embodiment of the disclosure.
FIG. 12 is a schematic cross-sectional view of the display panel of FIG. 10 and FIG. 11.
FIG. 13 is a schematic front view of partial film layers of a display panel according to a fifth embodiment of the disclosure.
FIG. 14 is a schematic front view of partial film layers of a display panel according to a sixth embodiment of the disclosure.
FIG. 15 and FIG. 16 are schematic cross-sectional views of the display panel of FIG. 14.

### DESCRIPTION OF THE EMBODIMENTS

It is to be understood that both the foregoing and other detailed descriptions, features and advantages are intended to be described more comprehensively by providing an embodiment accompanied with figures hereinafter. Directional terms used in the following embodiments, such as upper, lower, left, right, front, and rear, merely refer to directions in the accompanying drawings. Therefore, the directional terms are used to illustrate rather than limit the disclosure.

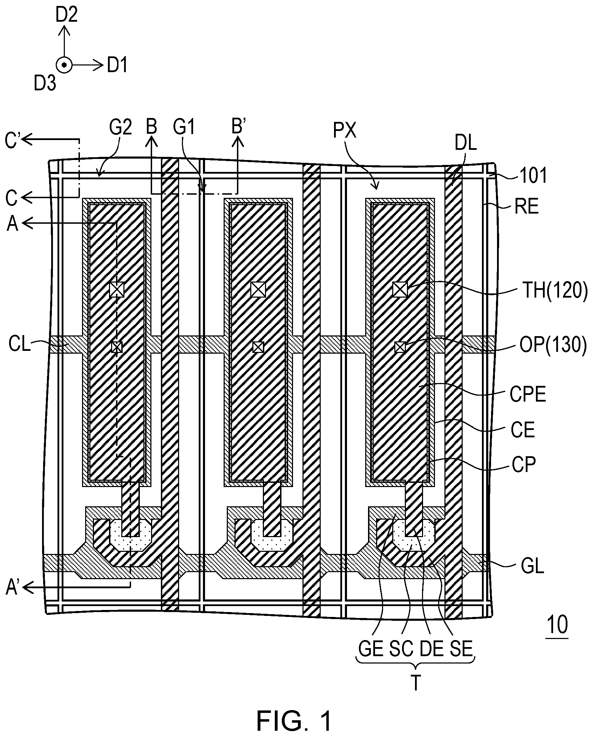

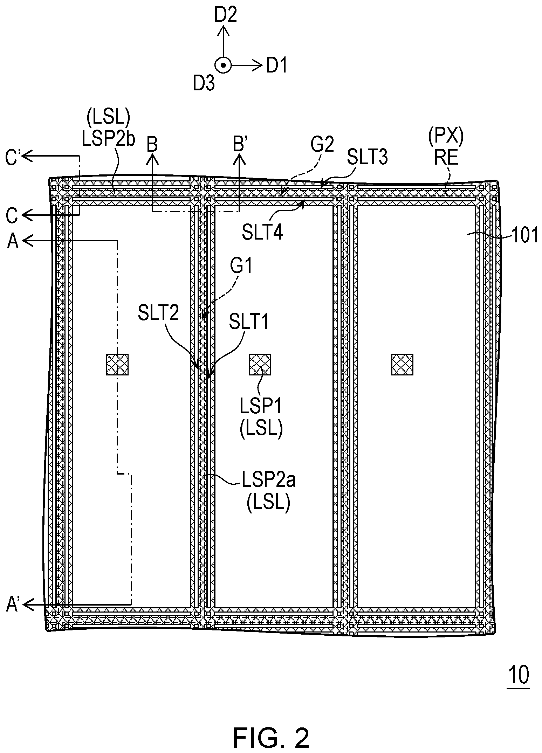

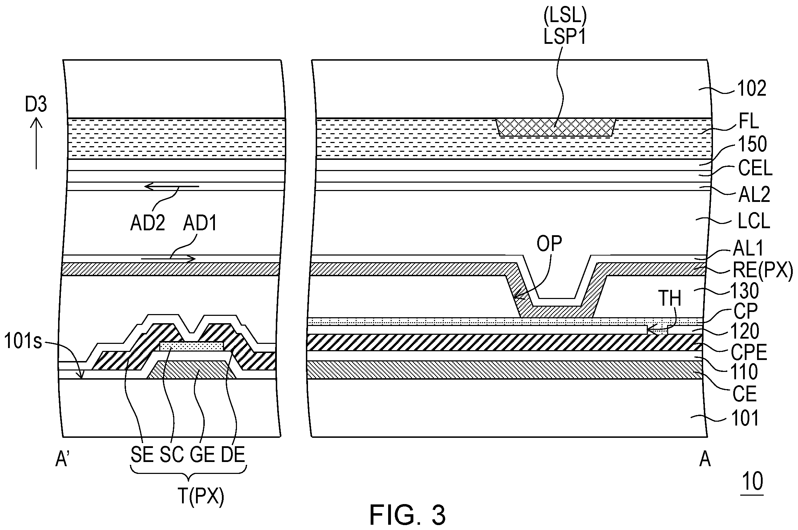

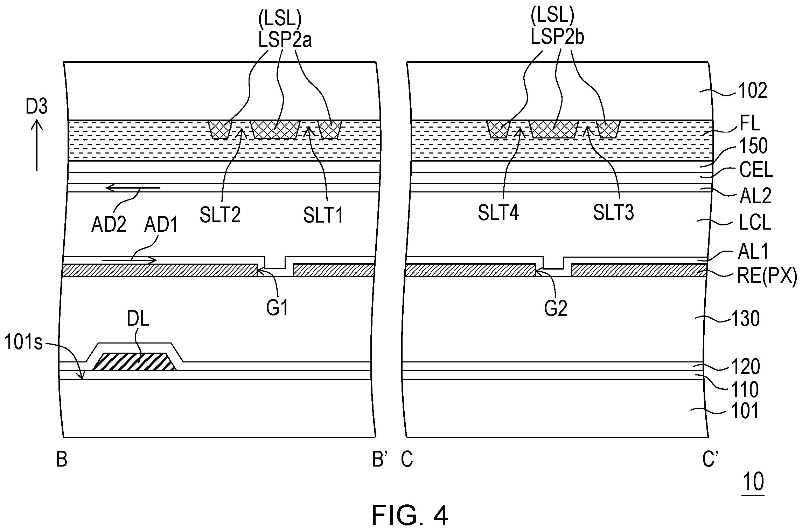

FIG. 1 and FIG. 2 are schematic front views of partial film layers of a display panel according to a first embodiment of the disclosure. FIG. 3 and FIG. 4 are schematic cross-sectional views of the display panel of FIG. 1 and FIG. 2. FIG. 3 corresponds to a section line A-A' in FIG. 1 and FIG. 2. FIG. 4 corresponds to a section line B-B' and a section line C-C' in FIG. 1 and FIG. 2. Specifically, FIG. 1 and FIG. 2 are respectively top views of the display panel 10 presented from one side of the second substrate 102 of FIG. 3 and FIG. 4 and along a direction D3. For clarity, FIG. 1 and FIG. 2 omit the presentation of some film layers shown in FIG. 3 and FIG. 4.

Referring to FIG. 1 and FIG. 3, a display panel includes a first substrate 101, a second substrate 102, a plurality of data lines DL, a plurality of scan lines GL, a plurality of pixel structures PX and a liquid crystal layer LCL. The first substrate 101 and the second substrate 102 are arranged to overlap each other, and the liquid crystal layer LCL is arranged between the first substrate 101 and the second substrate 102. The overlapping relationship here means, for example, that the first substrate 101 and the second substrate 102 overlap each other along a stacking direction (e.g., direction D3). Unless otherwise mentioned below, the overlapping relationship between two components is defined in this way, and the overlapping direction will not be described again.

In the embodiment, the plurality of data lines DL are arranged at intervals on the first substrate 101 along a direction D1 and extend in a direction D2, and the plurality of scan lines GL are arranged at intervals on the first substrate 101 along the direction D2 and extend in the direction D1. The directions D1, D2 and D3 may be selectively perpendicular to each other, but are not limited thereto. More specifically, the scan lines GL intersect the data lines DL and define a plurality of pixel areas of the display panel 10. The plurality of pixel structures PX are respectively arranged in the pixel areas, and each of which is electrically connected to a scan line GL and a data line DL. For example, the plurality of pixel structures PX can be arranged in multiple rows and multiple columns along the direction D1 and the direction D2 respectively, that is, the pixel structures PX are arranged to form an array on the first substrate 101.

In detail, each of the pixel structures PX may include an active device T and a reflective electrode RE electrically connected to each other. In the embodiment, the method of forming the active device T may include the following steps: sequentially forming a gate electrode GE, a gate insulating layer 110, a semiconductor pattern SC, a source electrode SE and a drain electrode DE on the first substrate 101. The semiconductor pattern SC is arranged to overlap the gate electrode GE. The source electrode SE and the drain electrode DE overlap the semiconductor pattern SC and are in electrical contact with two different regions of the semiconductor pattern SC. In the embodiment, the gate electrode GE of the active device T can be selectively disposed below the semiconductor pattern SC to form a bottom-gate thin film transistor (bottom-gate TFT), but the disclosure is not limited thereto. In other embodiments, the gate electrode of the active device may also be selectively disposed above the semiconductor pattern to form a top-gate thin film transistor (top-gate TFT).

Furthermore, the active device T may be covered with an insulating layer 120 and an insulating layer 130 in sequence. In the embodiment, the insulating layer 120 is, for example, a passivation layer, and the insulating layer 130 is, for example, a planarization layer. For example, in the embodiment, the pixel structure PX may further include a common electrode CE, a capacitor electrode CPE, and a conductive pattern CP overlapped with each other, but the disclosure is not limited thereto. The common electrode CE is provided between the first substrate 101 and the gate insulating layer 110. The capacitor electrode CPE is provided between the gate insulating layer 110 and the insulating layer 120. Therefore, the capacitor electrode CPE, the common electrode CE and the gate insulating layer 110 sandwiched therebetween form a storage capacitor. In other embodiments, the pixel structure PX may not include the common electrode CE and the capacitor electrode CPE overlapped with each other. The conductive pattern CP is disposed between the insulating layer 120 and the insulating layer 130. In the embodiment, the display panel 10 may be further provided with a plurality of common electrode lines CL on the first substrate 101, and the common electrode lines CL respectively connect a plurality of the common electrodes CE of the plurality of pixel structures PX in series.

In the embodiment, the insulating layer 130 has an opening OP overlapping the reflective electrode RE, and the opening OP exposes a portion of a surface of the conductive pattern CP. The reflective electrode RE of the pixel structure PX is disposed on a surface of the insulating layer 130 and is electrically connected to the conductive pattern CP through the opening OP of the insulating layer 130. The conductive pattern CP is electrically connected to the capacitor electrode CPE through a contact hole TH of the insulating layer 120, and the capacitor electrode CPE may extend from the drain electrode DE of the active device T (i.e., the drain electrode DE and the capacitor electrode CPE are coupled to each other), but the disclosure is not limited thereto. In other embodiments, the pixel structure PX may not include the conductive pattern CP, and the reflective electrode RE is electrically connected to the drain electrode DE of the active device T through a through hole penetrating the insulating layer 130 and the insulating layer 120.

It should be noted that the gate electrode GE, the source electrode SE, the drain electrode DE, the semiconductor pattern SC, the gate insulating layer 110, the passivation layer (i.e., the insulating layer 120) and the planarization layer (i.e., the insulating layer 130) may be respectively implemented by any gate electrode, any source electrode, any drain electrode, any semiconductor pattern, any gate insulating layer, any passivation layer and any planarization layer used for a display panel that is well known to those skilled in the art. The gate electrode GE, the source electrode SE, the drain electrode DE, the semiconductor pattern SC, the gate insulating layer 110, the passivation layer and the planarization layer may be formed by any method well known to those skilled in the art, so it will not be described in detail here.

Further, the display panel 10 further includes a filter layer FL disposed on the second substrate 102. For example, the filter layer FL may include a plurality of filter patterns (not shown). The filter patterns are respectively overlapped with the plurality of reflective electrodes RE of the plurality of pixel structures PX, and each of which is suitable for passing red light, green light or blue light. That is to say, the filter patterns may include red color resists, green color resists and blue color resists, but the disclosure is not limited thereto.

In the embodiment, a common electrode layer CEL and an overcoat layer 150 may be further provided on the second substrate 102, but the disclosure is not limited thereto. In other embodiments, the common electrode layer CEL may be disposed on the first substrate 101. The overcoat layer 150 covers the filter layer FL, and the common electrode layer CEL is disposed on the overcoat layer 150. The electric field generated between the common electrode layer CEL and the reflective electrode RE is suitable for driving a plurality of liquid crystal molecules (not shown) of the liquid crystal layer LCL to rotate to form an alignment state corresponding to the direction and intensity of the electric field. By changing the alignment state of the liquid crystal molecules, the polarization state of the light passing through the liquid crystal layer LCL is altered, resulting in a light emission brightness corresponding to the alignment state.

In order to orient the alignments of multiple liquid crystal molecules of the liquid crystal layer LCL in a natural state (i.e., without external forces), a first alignment layer AL1 covering the plurality of reflective electrodes RE may be further provided on the first substrate 101, and a second alignment layer AL2 covering the common electrode layer CEL may be further provided on second substrate 102. The liquid crystal layer LCL is sandwiched between the first alignment layer AL1 and the second alignment layer AL2. For example, in the embodiment, a first alignment direction AD1 of the first alignment layer AL1 may be anti-parallel to a second alignment direction AD2 of the second alignment layer AL2. That is, the liquid crystal layer LCL may be driven in an electrically controlled birefringence (ECB) mode, an in-plane switching (IPS) mode or a fringe-field switching (FFS) mode. However, the disclosure is not limited thereto. In other embodiments, the first alignment direction AD1 may be perpendicular to the second alignment direction AD2, that is, the liquid crystal layer LCL may be driven in a twisted nematic (TN) mode.

Due to a significant topographic step difference of the opening OP of the insulating layer 130, a weak alignment is formed in a portion of the first alignment layer AL1 within the opening OP during the alignment process of the first alignment layer AL 1. This is because the portion of the first alignment layer AL 1 in the opening OP is more difficult to be rubbed by the fibers on the machine roller, leading to poor alignment of the liquid crystal layer LCL near the opening OP and causing light leakage in a dark state. In order to solve the aforementioned problem, the display panel 10 of the embodiment further includes a light shielding layer LSL disposed on the second substrate 102 and covered by the filter layer FL. The light shielding layer LSL includes a light shielding pattern LSP1 arranged to overlap the opening OP of the insulating layer 130. That is, the light shielding pattern LSP1 overlaps the reflective electrode RE of the pixel structure PX.

In the embodiment, an orthographic projection of the opening OP of the insulating layer 130 on a substrate surface 101s of the first substrate 101 is located within an orthographic projection of the light shielding pattern LSP1 on the substrate surface 101s. Through the configuration of the light shielding pattern LSP1, the aforementioned light leakage caused by poor alignment of the liquid crystal layer LCL can be blocked, and thereby improving the performance of the display panel 10 operated in the dark state.

Referring to FIG. 1, FIG. 2 and FIG. 4, on the other hand, in the embodiment, the plurality of reflective electrodes RE of the plurality of pixel structures PX may be arranged at intervals along the direction D1 and the direction D2 respectively. That is, a gap is provided between any two adjacent ones of the reflective electrodes RE along the direction D1 or the direction D2. For example, a gap G1 is provided between any two adjacent ones of the reflective electrodes RE arranged along the direction D1, and a gap G2 is provided between any two adjacent ones of the reflective electrodes RE arranged along the direction D2.

When driving the liquid crystal layer LCL, any two reflective electrodes RE adjacently arranged along the direction D1 or the direction D2 may respectively have voltages with opposite polarities. That is to say, the display panel 10 of the embodiment drives multiple pixel structures PX in a polarity inversion (e.g., column inversion or dot inversion) manner. Therefore, the voltage difference between any two adjacent reflective electrodes RE may easily cause poor alignment of the liquid crystal molecules in the liquid crystal layer LCL between the two adjacent reflective electrodes RE, resulting in light leakage at the gap G1 and the gap G2.

In order to block light leakage at the gaps between the plurality of reflective electrodes RE, the light shielding layer LSL further includes a light shielding pattern overlapping the gaps, such as a light shielding pattern LSP2a overlapping the gap G1 and extending in the direction D2, and a light shielding pattern LSP2b overlapping the gap G2 and extending in the direction D1. It is particularly important to note that the light shielding pattern LSP2a has a micro slit SLT1 and a micro slit SLT2 arranged parallel to the gap G1. The light shielding pattern LSP2b has a micro slit SLT3 and a micro slit SLT4 arranged parallel to the gap G2.

More specifically, the micro slit SLT1 and the micro slit SLT2 are respectively located on opposite sides of the gap G1 along the direction D1 and extend in the direction D2. The micro slit SLT3 and the micro slit SLT4 are respectively located on opposite sides of the gap G2 along the direction D2 and extend in the direction D1. When the light shielding pattern LSP2a and the light shielding pattern LSP2b block light leakage at the gap, the area of a reflective surface of the reflective electrode RE blocked by the light shielding pattern LSP2a and the light shielding pattern LSP2b may be reduced through the configuration of the micro-slits.

Through the configuration of the aforementioned light shielding layer LSL, the light leakage caused by poor alignments of the liquid crystal layer LCL above the reflective electrode RE (for example, near the opening OP of the insulating layer 130 in FIG. 3) and in the gap areas (for example, the gap G1 or the gap G2) between any two adjacent reflective electrodes RE may be blocked, which helps to improve the performance of the display panel 10 operated in a dark state, and thereby improving its display contrast.

Some other embodiments are provided below to describe the invention in detail, where the same reference numerals denote the same or like components, and descriptions of the same technical contents are omitted. The aforementioned embodiment may be referred for descriptions of the omitted parts, and detailed descriptions thereof are not repeated in the following embodiment.

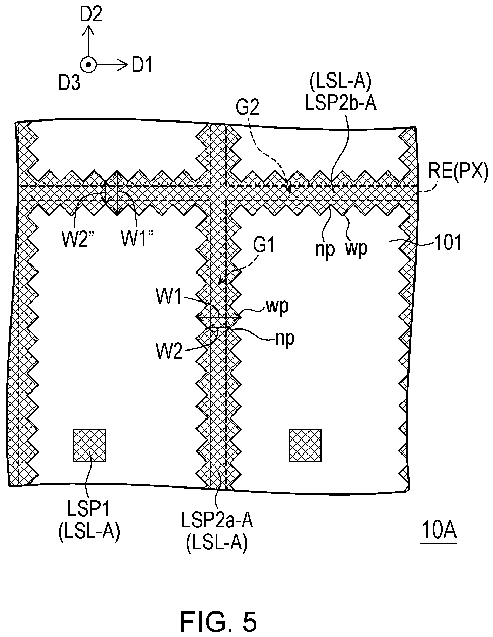

FIG. 5 is a schematic front view of partial film layers of a display panel according to a second embodiment of the disclosure. It should be noted first that, film layers of the display panel 10A other than the portion shown in FIG. 5 are similar to the display panel 10 of the previous embodiment. Therefore, for the structure illustration and description of other film layers, please refer to the relevant drawings and description paragraphs of the foregoing embodiments, and will not be described again below.

Referring to FIG. 5, the difference between the display panel 10A of the embodiment and the display panel 10 of FIG. 1 and FIG. 2 lies in that the configuration of the light shielding pattern is different. Specifically, in the light shielding layer LSL-A of the embodiment, the light shielding patterns LSP2a-A and the light shielding patterns LSP2b-A respectively overlapping the gap G1 and gap G2 may each have a plurality of wide portions wp and a plurality of narrow portions np.

For example, the plurality of wide portions wp and the plurality of narrow portions np of the light shielding pattern LSP2a-A may be alternately arranged along the direction D2 and connected to each other. A width W1 of any wide portion wp of the light shielding pattern LSP2a-A along the direction D1 is greater than a width W2 of any narrow portion np of the light shielding pattern LSP2a-A along the direction D1. Similarly, the plurality of wide portions wp and the plurality of narrow portions np of the light shielding pattern LSP2b-A may be alternately arranged along the direction D1 and connected to each other. A width W1" of any wide portion wp of the light shielding pattern LSP2b-A along the direction D2 is greater than a width W2" of any narrow portion np of the light shielding pattern LSP2b-A along the direction D2.

When the light shielding pattern LSP2a-A and the light shielding pattern LSP2b-A block light leakage at the gap, the area of a reflective surface of the reflective electrode RE blocked by the light shielding pattern LSP2a-A and the light shielding pattern LSP2b-A may be reduced through the wide and narrow design (such as a zigzag design) of the above-mentioned light shielding pattern in the extension direction.

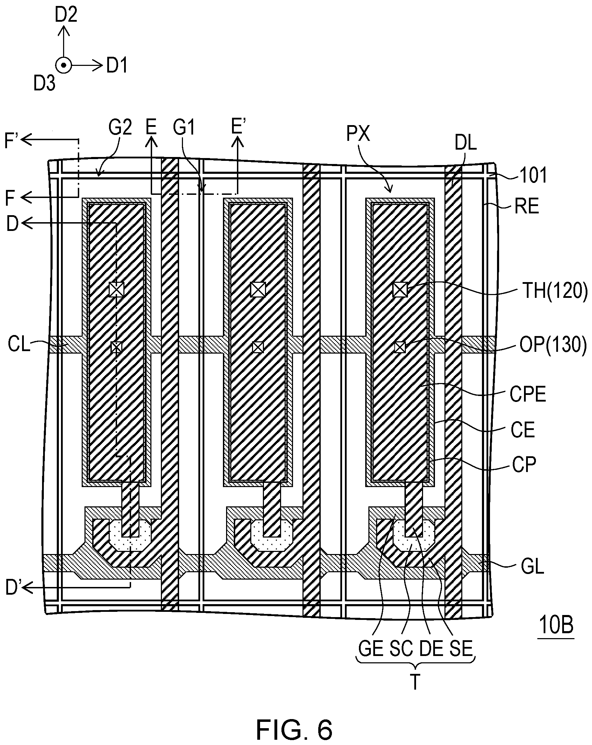

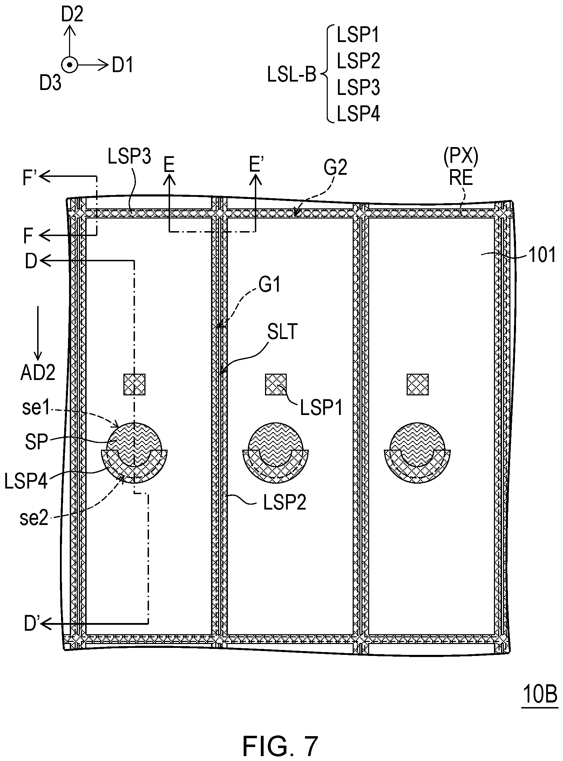

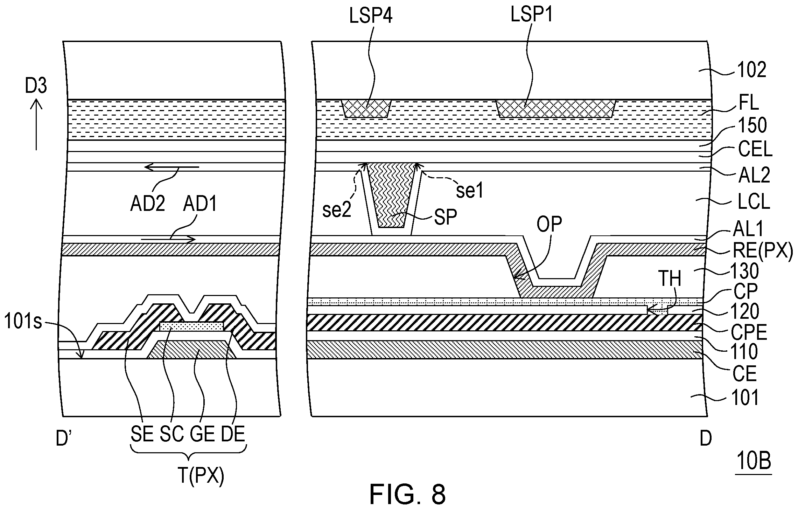

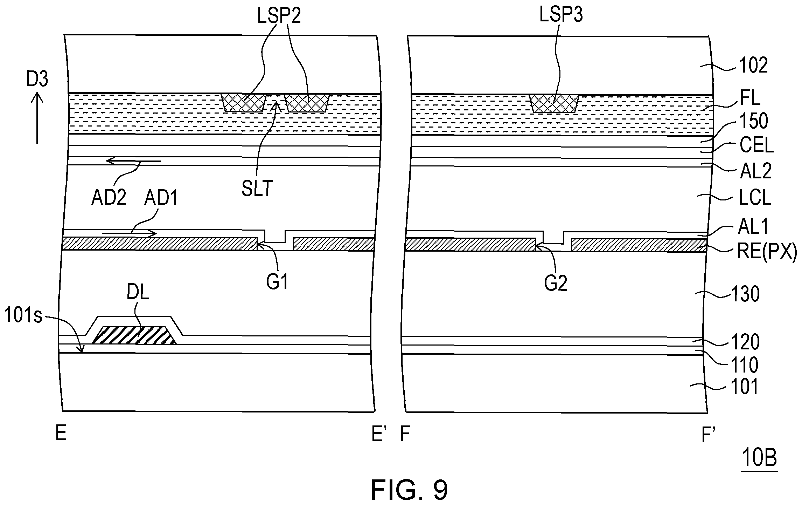

FIG. 6 and FIG. 7 are schematic front views of partial film layers of a display panel according to a third embodiment of the disclosure. FIG. 8 and FIG. 9 are schematic cross-sectional views of the display panel of FIG. 6 and FIG. 7. FIG. 8 corresponds to a section line D-D' in FIG. 6 and FIG. 7. FIG. 9 corresponds to a section line E-E' and a section line F-F' in FIG. 6 and FIG. 7. Specifically, FIG. 6 and FIG. 7 are respectively top views of the display panel 10B presented from one side of the second substrate 102 of FIG. 8 and FIG. 9 and along a direction D3. For clarity, FIG. 6 and FIG. 7 omit the presentation of some film layers shown in FIG. 8 and FIG. 9.

Referring to FIG. 6 to FIG. 8, the difference between a display panel 10B of the embodiment and the display panel 10 of FIG. 1 and FIG. 2 lies in that the light shielding layer is arranged in a different manner. It should be noted first that a plurality of spacers SP are provided between the first substrate 101 and the second substrate 102 of the display panel 10B to create a cavity that can be filled with the liquid crystal layer LCL. In the embodiment, the spacers SP may be dispersedly disposed on the second substrate 102 and overlap the plurality of reflective electrodes RE of the plurality of pixel structures PX. The spacers SP are located between the second alignment layer AL2 and the second substrate 102. However, the disclosure is not limited thereto. In other embodiments, the spacers SP may be disposed on the first substrate 101 (i.e., the spacers SP may be disposed between the first alignment layer AL1 and the first substrate 101).

In the embodiment, the spacer SP may completely overlap the reflective electrode RE, that is, an orthographic projection of the spacer SP on the substrate surface 101s is located within an orthographic projection of the reflective electrode RE on the substrate surface 101s, but the disclosure is not limited thereto. In other embodiments, the spacer SP may be disposed between two adjacent pixel structures PX and overlap the two reflective electrodes RE of the two adjacent pixel structures PX.

In the embodiment, the spacer SP has a first side edge se1 and a second side edge se2 facing away from each other and sequentially arranged along the second alignment direction AD2. In particular, since the spacer SP has a significant height difference compared to the film surface (such as the surface of the common electrode layer CEL) on which it stands, the alignment effect of a part (i.e., the part of the second alignment layer AL2 located near the second side edge se2 of the spacer SP) of the second alignment layer AL2 that is blocked by the spacer SP along the second alignment direction AD2 will be reduced during the alignment process (such as rubbing alignment) of the second alignment layer AL2, which affects the alignment state of a part of the liquid crystal layer LCL and leading to light leakage when the display panel 10B is operated in a dark state.

In order to solve the light leakage phenomenon caused by the spacer SP, the light shielding layer LSL-B of the embodiment may further include a light shielding pattern LSP4. The light shielding pattern LSP4 overlaps the second side edge se2 of the spacer SP, but does not overlap the first side edge se1 of the spacer SP. For example, in the embodiment, a contour of orthographic projection of the spacer SP on the substrate surface 101s may be circular, and a contour of orthographic projection of the light shielding pattern LSP4 on the substrate surface 101s may be a half-moon shape (as shown in FIG. 7), but the disclosure is not limited thereto. In other embodiments, the configurations of the spacers SP and the light shielding patterns LSP4 may be adjusted according to actual design requirements.

Based on the configuration of the light shielding pattern LSP4, the light leakage in a dark state caused by the weak alignment of the second alignment layer AL2 on a side of the second side edge se2 of the spacer SP may be effectively improved.

Referring to FIG. 6, FIG. 7 and FIG. 9, on the other hand, in the light shielding layer LSL-B of the embodiment, the configuration of the light shielding pattern LSP2 used to block the gap G1 may be different from that of the light shielding pattern LSP3 used to block the gap G2. For example, in the embodiment, the light shielding pattern LSP2 overlapping the gap G1 may have a micro-slit SLT, but the light shielding pattern LSP3 overlapping the gap G2 does not have a micro-slit SLT.

It is particularly important to note that the micro-slit SLT of the light shielding pattern LSP2 overlaps the gap G1, and an orthographic projection of the gap G2 on the substrate surface 101s is located within an orthographic projection of the light shielding pattern LSP3 on the substrate surface 101s. When the light shielding pattern LSP2 block light leakage at the gap, the area of a reflective surface of the reflective electrode RE blocked by the light shielding pattern LSP2 may be reduced through the configuration of the micro-slit SLT.

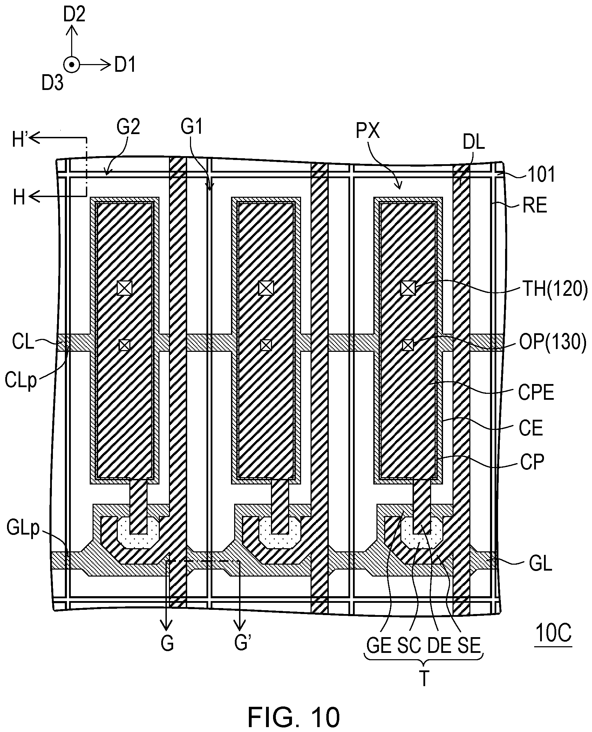

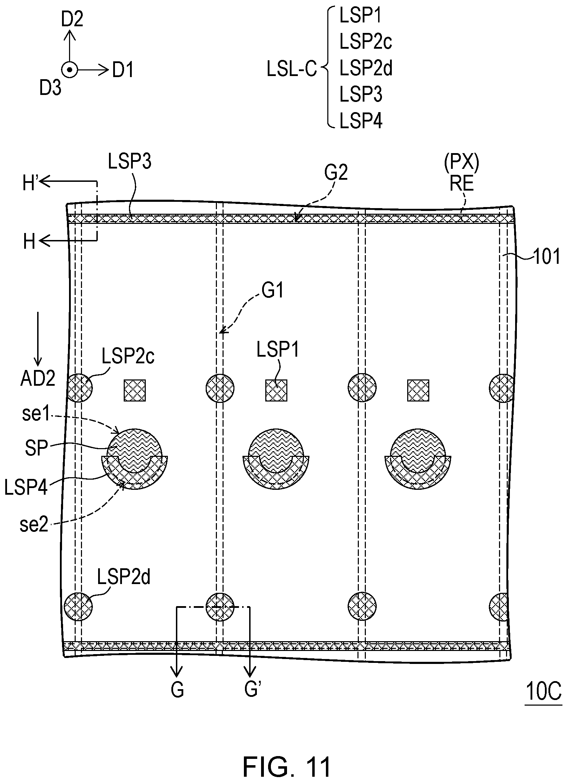

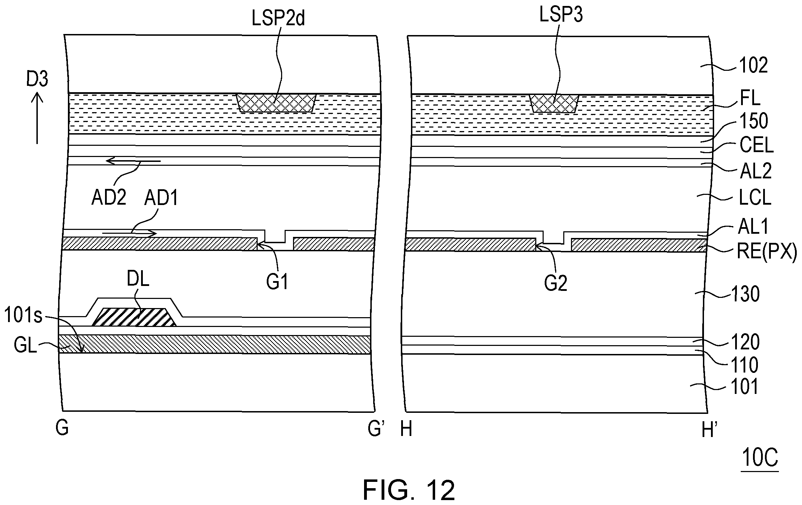

FIG. 10 and FIG. 11 are schematic front views of partial film layers of a display panel according to a fourth embodiment of the disclosure. FIG. 12 is a schematic cross-sectional view of the display panel of FIG. 10 and FIG. 11. FIG. 12 corresponds to a section line G-G' and a section line H-H' in FIG. 10 and FIG. 11. Specifically, FIG. 10 and FIG. 11 are respectively top views of the display panel 10C presented from one side of the second substrate 102 of FIG. 12 and along a direction D3. For clarity, FIG. 10 and FIG. 11 omit the presentation of some film layers shown in FIG. 12. Referring to FIG. 10 to FIG. 12, the only difference between a display panel 10C of the embodiment and the display panel 10B in FIG. 6 and FIG. 7 lies in that the configuration of the light shielding pattern overlapping the gap G1 is different.

Specifically, in the light shielding layer LSL-C of the embodiment, the light shielding pattern overlapping the gap G1 only overlaps the scan line GL or the common electrode line CL, and does not extend in the direction D2 to block the entire gap G1. For example, the common electrode line CL has a portion CLp overlapping the gap G1, and the scan line GL has a portion GLp overlapping the gap G1. The light shielding pattern LSP2c and the light shielding pattern LSP2d of the light shielding layer LSL-C overlapping the gap G1 respectively overlap the portion CLp of the common electrode line CL and the portion GLp of the scan line GL. More specifically, an orthographic projection of the portion CLp of the common electrode line CL on the substrate surface 101s is located within an orthographic projection of the light shielding pattern LSP2c on the substrate surface 101s, and an orthographic projection of the portion GLp of the scan line GL on the substrate surface 101s is located within an orthographic projection of the light shielding pattern LSP2d on the substrate surface 101s.

In particular, since the electric fields of the common electrode line CL and the scan line GL will leak out from the gap G1, resulting in poor alignment of liquid crystal molecules of the liquid crystal layer LCL near the gap G1. By using the configuration of the light shielding pattern LSP2c and the light shielding pattern LSP2d, the light leakage problem occurring at intersections of the gap G1 and each of the common electrode line CL and the scan line GL may be improved, and thereby improving the performance of the display panel 10C operated in a dark state.

In the embodiment, a contour of orthographic projection of each of the light shielding pattern LSP2c and the light shielding pattern LSP2d on the substrate surface 101s may be circular, but the disclosure is not limited thereto. On the other hand, since the light shielding pattern LSP2c and the light shielding pattern LSP2d do not extend to block the entire gap G1, the area of a reflective surface of the reflective electrode RE blocked by the light shielding layer LSL-C may be reduced when the light shielding layer LSL-C blocks light leakage.

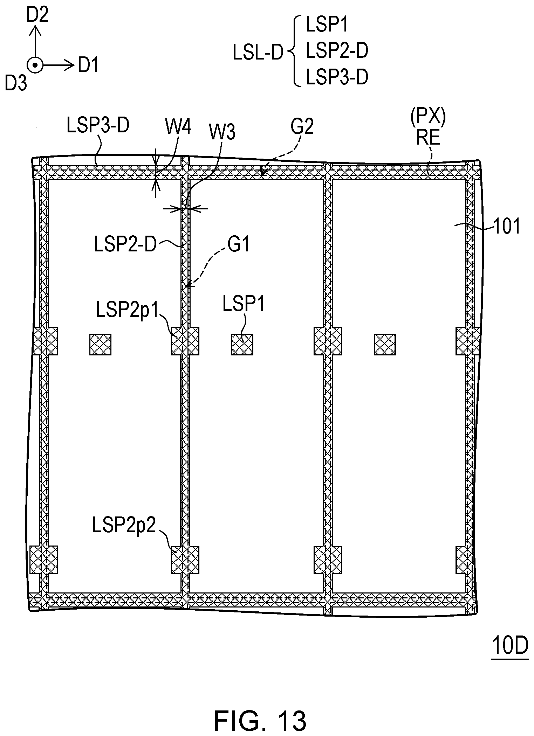

FIG. 13 is a schematic front view of partial film layers of a display panel according to a fifth embodiment of the disclosure. It should be noted first that, film layers of the display panel 10D other than the portion shown in FIG. 13 are similar to the display panel 10 of the previous embodiment. Therefore, for the structure illustration and description of other film layers, please refer to the relevant drawings and description paragraphs of the foregoing embodiments, and will not be described again below.

Referring to FIG. 13, the difference between the display panel 10D of the embodiment and the display panel 10 of FIG. 1 and FIG. 2 lies in that the configuration of the light shielding layer is different. Specifically, in the light shielding layer LSL-D of the embodiment, the light shielding pattern LSP2-D and the light shielding pattern LSP3-D respectively overlapping the gap G1 and the gap G2 are not provided with the micro-slit SLT1, the micro-slit SLT2, the micro-slit SLT3 and the micro-slit SLT4 shown in FIG. 2.

From another point of view, an orthographic projection of the gap G1 on the first substrate 101 (or the substrate surface 101s as shown in FIG. 12) is located within an orthographic projection of the light shielding pattern LSP2-D on the first substrate 101. An orthographic projection of the gap G2 on the first substrate 101 is located within an orthographic projection of the light shielding pattern LSP3-D on the first substrate 101. It is particularly noted that a width W3 of the light shielding pattern LSP2-D along the direction D1 may be different from (for example, greater than) a width W4 of the light shielding pattern LSP3-D along the direction D2.

In order to solve the problem of light leakage at the intersection of the gap G1 and each of the common electrode line CL and the scan line GL in the display panel 10C shown in FIG. 10 and FIG. 11, the light shielding pattern LSP2-D of the embodiment may have a light shielding portion LSP2p1 and a light shielding portion LSP2p2 whose function is similar to that of the light shielding pattern LSP2c and the light shielding pattern LSP2d in FIG. 11. The light shielding portion LSP2p1 overlaps the intersection of the common electrode line CL and the gap G1. The light shielding portion LSP2p2 overlaps the intersection of the scan line GL and the gap G1.

Different from the light shielding pattern LSP2c and the light shielding pattern LSP2d in FIG. 11, a contour of orthographic projection of each of the light shielding portions LSP2p1 and LSP2p2 of the embodiment on the first substrate 101 may be rectangular.

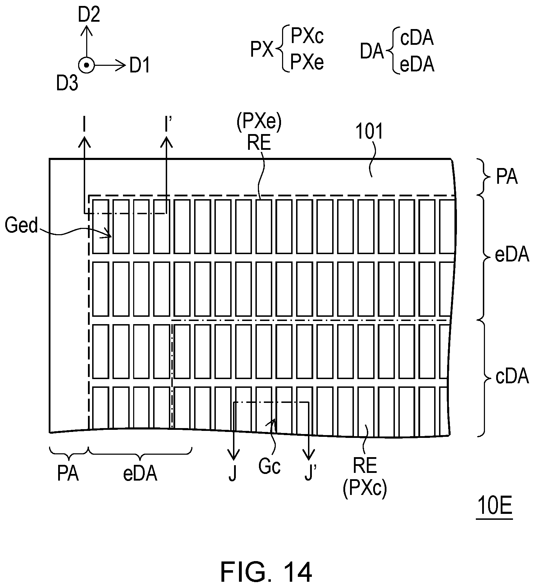

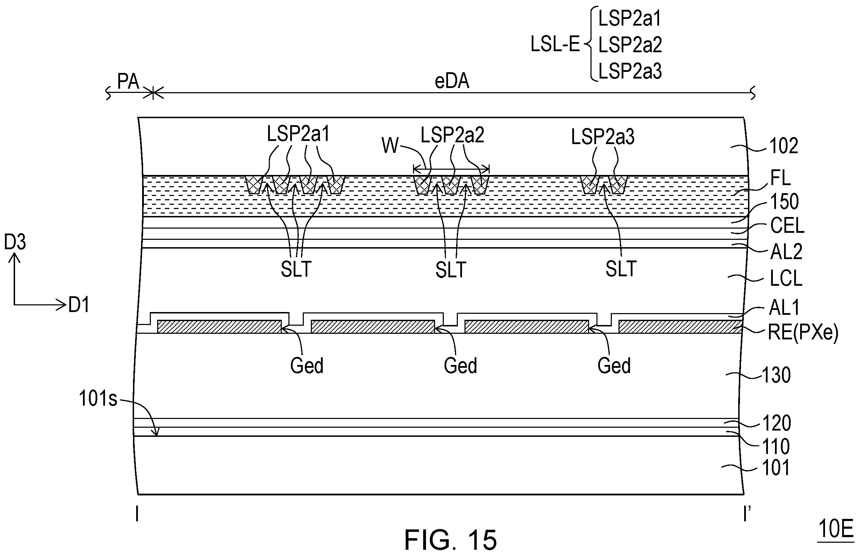

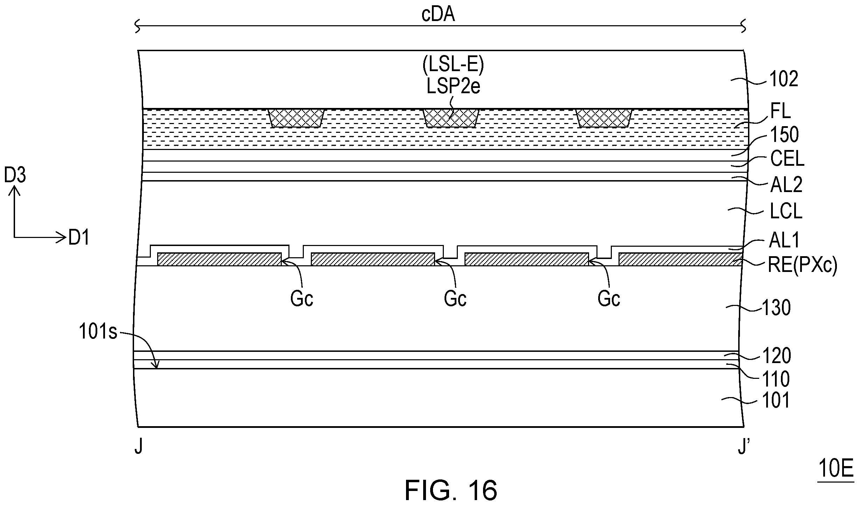

FIG. 14 is a schematic front view of partial film layers of a display panel according to a sixth embodiment of the disclosure. FIG. 15 and FIG. 16 are schematic cross-sectional views of the display panel of FIG. 14. FIG. 15 corresponding to a section line I-I' in FIG. 14. FIG. 16 corresponding to a section line J-J' in FIG. 14. It should be noted first that, film layers of the display panel 10E other than the light shielding layer LSL-E shown in FIG. 14 and FIG. 15 are similar to the display panel 10 of the previous embodiment. Therefore, for the structure illustration and description of other film layers, please refer to the relevant drawings and description paragraphs of the foregoing embodiments, and will not be described again below.

Referring to FIG. 14 to FIG. 16, in the embodiment, the first substrate 101 of the display panel 10E is provided with a display area DA and a peripheral area PA outside the display area DA. The display area DA may include an edge display area eDA adjacent to the peripheral area PA and a central display area cDA far away from the peripheral area PA. That is, the edge display area eDA is located between the central display area cDA and the peripheral area PA.

In the embodiment, the plurality of pixel structures PX may include a plurality of pixel structures PXc disposed in the central display area cDA and a plurality of pixel structures PXe disposed in the edge display area eDA. A gap Gc is provided between the two reflective electrodes RE of any two adjacent ones of the pixel structures PXc arranged along the direction D1. A gap Ged is provided between the two reflective electrodes RE of any two adjacent ones of the pixel structures PXe arranged along the direction D 1.

On the other hand, the light shielding layer LSL-E includes a light shielding pattern LSP2e overlapping the gap Gc and a light shielding pattern (e.g., a light shielding pattern LSP2a1, a light shielding pattern LSP2a2, or a light shielding pattern LSP2a3) overlapping the gap Ged. The light shielding pattern located in the edge display area eDA may have at least one micro-slit SLT, while the light shielding pattern located in the central display area cDA is provided without any micro-slit. In the embodiment, an orthographic projection of the gap Gc on the substrate surface 101s is located within an orthographic projection of the light shielding pattern LSP2e on the substrate surface 101s. That is, the gap Gc completely overlaps the light shielding pattern LSP2e.

It is particularly noted that the number of micro-slits SLT of the light shielding pattern located in the edge display area eDA may gradually decrease as it moves away from the peripheral area PA. As shown in Figures 14 and 15, for example, three adjacent light shielding patterns arranged within the edge display area eDA along the direction D1 and ordered from closest to furthest according to their distance from the peripheral area PA are the light shielding pattern LSP2a1, light shielding pattern LSP2a2, and the light shielding pattern LSP2a3. The light shielding pattern LSP2a1 may be provided with three micro slits SLT. The light shielding pattern LSP2a2 may be provided with two micro slits SLT. The light shielding pattern LSP2a3 may be provided with a micro slit SLT.

From another point of view, a width W of distribution range of each of the light shielding patterns LSP2a1, the light shielding pattern LSP2a2 and the light shielding pattern LSP2a3 along the direction D1 gradually decreases as it moves away from the peripheral area PA. Through such a configuration relationship, the brightness difference between the periphery and the center of the display area DA of the display panel 10E caused by manufacturing process factors may be reduced, and thereby improving the uniformity of the display brightness of the display panel 10E.

It should be understood that, although it is not shown in the drawings that the gap between the two reflective electrodes RE of any two pixel structures PXe located in the edge display area eDA and adjacently arranged along the direction D2 may be overlapped with a light shielding pattern extending in the direction D1 and having at least one micro-slit. Similar to the light shielding pattern extending in the direction D2 and provided with micro-slits, the number of micro-slits of the light shielding pattern extending in the direction D1 will gradually decrease as the light shielding pattern moves away from the peripheral area PA along the direction D2.

To sum up, in a display panel according to an embodiment of the disclosure, a light shielding pattern overlapping a reflective electrode of a pixel structure is suitable for blocking light leakage caused by poor alignment of a liquid crystal layer above or at the edges of the reflective electrode, which helps to improve the performance of display panel operated in a dark state, and thereby enhancing its display contrast.

## Claims

1. A display panel (10, 10A, 10B, 10C, 10D, 10E), comprising:
a first substrate (101) and a second substrate (102), overlapped along a stacking direction (D3);
a pixel structure (PX, PXc, PXe), disposed on the first substrate (101) and having an active device (T) and a reflective electrode (RE) electrically connected to each other;
a liquid crystal layer (LCL), disposed between the first substrate (101) and the second substrate (102); and
a light shielding layer (LSL, LSL-A, LSL-B, LSL-C, LSL-D, LSL-E), disposed on the second substrate (102), wherein the light shielding layer (LSL, LSL-A, LSL-B, LSL-C, LSL-D, LSL-E) includes a first light shielding pattern (LSP1, LSP2, LSP2a, LSP2a1, LSP2a2, LSP2a3, LSP2b, LSP2c, LSP2d, LSP2e, LSP2a-A, LSP2b-A, LSP2b-A, LSP2-D, LSP3, LSP3-D, LSP4), and the first light shielding pattern (LSP1, LSP2, LSP2a, LSP2a1, LSP2a2, LSP2a3, LSP2b, LSP2c, LSP2d, LSP2e, LSP2a-A, LSP2b-A, LSP2b-A, LSP2-D, LSP3, LSP3-D, LSP4) overlaps the reflective electrode (RE) of the pixel structure (PX, PXc, PXe) along the stacking direction (D3).

2. The display panel (10, 10A, 10B, 10C, 10D, 10E) according to claim 1, further comprising:
an insulating layer (130), disposed on the first substrate (101) and covering the active device (T), and the insulating layer (130) has an opening (OP) overlapping the reflective electrode (RE) of the pixel structure (PX), wherein the reflective electrode (RE) is disposed on the insulating layer (130) and extends into the opening (OP) to electrically connect the active device (T), and an orthographic projection of the opening (OP) of the insulating layer (130) on a substrate surface (101s) of the first substrate (101) is located within an orthographic projection of the first light shielding pattern (LSP1) on the substrate surface (101s).

3. The display panel (10) according to claim 2, wherein a plurality of the reflective electrodes (RE) of a plurality of the pixel structures (PX) are arranged at intervals along a first direction (D1, D2), a gap (G1, G2) is provided between any two adjacent ones of the reflective electrodes (RE), the light shielding layer (LSL) further includes a second light shielding pattern (LSP2a, LSP2b), the second light shielding pattern overlaps the gap (G1, G2) and has a first micro-slit (SLT1, SLT3) and a second micro-slit (SLT2, SLT4), and the first micro-slit (SLT1, SLT3) and the second micro-slit (SLT2, SLT4) are respectively located on two opposite sides of the gap (G1, G2) along the first direction (D1, D2).

4. The display panel (10A) according to claim 2, wherein a plurality of the reflective electrodes (RE) of a plurality of the pixel structures (PX) are arranged at intervals along a first direction (D1), a gap (G1, G2) is provided between any two adjacent ones of the reflective electrodes (RE), the light shielding layer (LSL-A) further includes a second light shielding pattern (LSP2a-A, LSP2b-A), the second light shielding pattern (LSP2a-A, LSP2b-A) overlaps the gap (G1, G2) and has a plurality of wide portions (wp) and a plurality of narrow portions (np), the wide portions (wp) and the narrow portions (np) are alternately arranged along a second direction (D2) and are connected to each other, the first direction (D1) is perpendicular to the second direction (D2), and a width (W1) of any one of the wide portions (wp) along the first direction (D1) is greater than a width (W2) of any one of the narrow portions (np) along the first direction (D1).

5. The display panel (10B) according to claim 2, wherein a plurality of the reflective electrodes (RE) of a plurality of the pixel structures (PX) are arranged at intervals along a first direction (D1) and a second direction (D2), the first direction (D1) is perpendicular to the second direction (D2), a first gap (G1) is provided between any two adjacent ones of the reflective electrodes (RE) arranged along the first direction (D1), the light shielding layer (LSL-B) further includes a second light shielding pattern (LSP2), the second light shielding pattern (LSP2) overlaps the first gap (G1) and has a micro-slit (SLT), the micro-slit (SLT) overlaps the first gap (G1), a second gap (G2) is provided between any two adjacent ones of the reflective electrodes (RE) arranged along the second direction (D2), the light shielding layer (LSL-B) further includes a third light shielding pattern (LSP3), and an orthographic projection of the second gap (G2) on the substrate surface (101s) is located within an orthographic projection of the third light shielding pattern (LSP3) on the substrate surface (101s).

6. The display panel (10B) according to claim 5, further comprising:
a spacer (SP), disposed between the first substrate (101) and the second substrate (102);
a first alignment layer (AL1), disposed on the first substrate (101) and has a first alignment direction (AD1); and
a second alignment layer (AL2), disposed on the second substrate (102) and has a second alignment direction (AD2), wherein the spacer (SP) has a first side edge (se1) and a second side edge (se2) facing away from each other and sequentially arranged along the first alignment direction (AD1) or the second alignment direction (AD2), the light shielding layer (LSL-B) further includes a fourth light shielding pattern (LSP4), and in the stacking direction (D3), the fourth light shielding pattern (LSP4) overlaps the second side edge (se2) of the spacer (SP) but does not overlap the first side edge (se1) of the spacer (SP).

7. The display panel (10B) according to claim 6, wherein a contour of orthographic projection of the spacer (SP) on the substrate surface (101s) is circular, and a contour of orthographic projection of the fourth light shielding pattern (LSP4) on the substrate surface (101s) is a half-moon shape.

8. The display panel (10C, 10D) according to claim 2, further comprising:
a common electrode (CE), disposed on the first substrate (101) and overlapping the reflective electrode (RE) of the pixel structure (PX); and
a common electrode line (CL), disposed on the first substrate (101) and being connected to the common electrode (CE), wherein a plurality of the reflective electrodes (RE) are arranged at intervals along a first direction (D1), a gap (G1) is provided between any two adjacent ones of the reflective electrodes (RE), the gap (G1) extends in a second direction (D2), the first direction (D1) is perpendicular to the second direction (D2), the common electrode line (CL) has a portion (CLp) overlapping the gap (G1), the light shielding layer (LSL-C, LSL-D) further includes a second light shielding pattern (LSP2c, LSP2-D), an orthographic projection of the portion (CLp) of the common electrode line (CL) on the substrate surface (101s) is located within an orthographic projection of the second light shielding pattern (LSP2c, LSP2-D) on the substrate surface (101s).

9. The display panel (10C, 10D) according to claim 2, further comprising:
a scan line (GL), disposed on the first substrate (101) and being electrically connected to the active device (T) of the pixel structure (PX), wherein a plurality of the reflective electrodes (RE) are arranged at intervals along a first direction (D1), a gap (G1) is provided between any two adjacent ones of the reflective electrodes (RE), the gap (G1) extends in a second direction (D2), the first direction (D1) is perpendicular to the second direction (D2), the scan line (GL) has a portion (GLp) overlapping the gap (G1), the light shielding layer (LSL-C, LSL-D) further includes a second light shielding pattern (LSP2d, LSP2-D), an orthographic projection of the portion (GLp) of the scan line (GL) on the substrate surface (101s) is located within an orthographic projection of the second light shielding pattern (LSP2d, LSP2-D) on the substrate surface (101s).

10. The display panel (10D) according to claim 2, wherein a plurality of the reflective electrodes (RE) of a plurality of the pixel structures (PX) are arranged at intervals along a first direction (D1) and a second direction (D2), the first direction (D1) is perpendicular to the second direction (D2), a first gap (G1) is provided between any two adjacent ones of the reflective electrodes (RE) arranged along the first direction (D1), a second gap (G2) is provided between any two adjacent ones of the reflective electrodes (RE) arranged along the second direction (D2), the light shielding layer (LSL-D) further includes a second light shielding pattern (LSP2-D) and a third light shielding pattern (LSP3-D), an orthographic projection of the first gap (G1) on the substrate surface (101s) is located within an orthographic projection of the second light shielding pattern (LSP2-D) on the substrate surface (101s), an orthographic projection of the second gap (G2) on the substrate surface (101s) is located within an orthographic projection of the third light shielding pattern (LSP3-D) on the substrate surface (101s), and a width (W3) of the second light shielding pattern (LSP2-D) along the first direction (D1) is different from a width (W4) of the third light shielding pattern (LSP3-D) along the second direction (D2).

11. The display panel (10E) according to claim 2, wherein the first substrate (101) is provided with a display area (DA) and a peripheral area (PA) outside the display area (DA), a plurality of the pixel structures (PX, PXc, PXe) are disposed in the display area (DA), the display area (DA) includes an edge display area (eDA) adjacent to the peripheral area (PA) and a central display area (cDA) far away from the peripheral area (PA), the pixel structures (PX) includes:
a plurality of first pixel structures (PXe), disposed in the edge display area (eDA); and
a plurality of second pixel structures (PXc), disposed in the central display area (cDA), wherein a first gap (Ged) is provided between the two reflective electrodes (RE) of any two adjacent ones of the first pixel structures (PXe) arranged along a first direction (D1), a second gap (Gc) is provided between the two reflective electrodes (RE) of any two adjacent ones of the second pixel structures (PXc) arranged along the first direction (D1), the light shielding layer (LCL-E) further includes a second light shielding pattern (LSP2a1, LSP2a2, LSP2a3) and a third light shielding pattern (LSP2e), the second light shielding pattern (LSP2a1, LSP2a2, LSP2a3) overlaps the first gap (Ged) and has at least one micro-slit (SLT), the third light shielding pattern (LSP2e) overlaps the second gap (Gc), and an orthographic projection of the second gap (Gc) on the substrate surface (101s) is located within an orthographic projection of the third light shielding pattern (LSP2e) on the substrate surface (101s).

12. The display panel (10E) according to claim 11, wherein the number of the at least one micro-slit (SLT) of the second light shielding pattern (LSP2a1, LSP2a2, LSP2a3) decreases gradually as it moves away from the peripheral area (PA).
